# EUROPEAN PATENT APPLICATION

(11) **EP 4 783 316 A1**
(43) Date of publication of application: **29.07.2026**
(21) Application number: 26153443.2
(22) Date of filing: 22.01.2026
(51) Int. Cl.: H01M 50/176, H01M 50/528, H01M 50/553, H01M 50/566, H01M 50/55

(54) **SECONDARY BATTERY AND BATTERY PACK INCLUDING THE SAME**

(30) Priority: 24.01.2025 KR 20250011130
(71) Applicant: SAMSUNG SDI CO., LTD., Yongin-si, Gyeonggi-do 17084 (KR)
(72) Inventor: Kim, Sang Won, 16678 Suwon-si, Gyeonggi-do (KR); Baek, Soo Min, 16678 Suwon-si, Gyeonggi-do (KR); Jung, Yeon Ho, 16678 Suwon-si, Gyeonggi-do (KR)
(74) Representative: Meissner Bolte Partnerschaft mbB

(57) **Abstract**

A secondary battery (20) and a battery pack including the same are provided. The secondary battery (20) includes a case (100), an electrode assembly (200) accommodated in the case (100), a cap plate (300) facing the electrode assembly (200), a pair of terminals (310) on the cap plate (300), the terminals (310) having different polarities, a current collector (400) connected to the electrode assembly (200) and extending through a first terminal (310) of the terminals (310), and a welded portion (500) between the current collector (400) and the first terminal (310).

## Description

### BACKGROUND

Embodiments of the present invention relate to a secondary battery and a battery pack including the same.

In recent times, the market for secondary batteries with high energy density and high capacity has rapidly increased with the rapid supply of electronic devices using such batteries, such as mobile phones, notebook computers, electric vehicles, and/or the like. Accordingly, research and development for improving the performance of lithium secondary batteries is being actively conducted.

A lithium secondary battery is a battery including a positive electrode and a negative electrode each including active materials capable of intercalating and deintercalating lithium ions, and an electrolyte, and produces electrical energy due to oxidation and reduction reactions when lithium ions are intercalated/deintercalated into/from the positive electrode and the negative electrode.

The above information disclosed in this Background section is intended to enhance understanding of the background of the invention and may contain information that does not constitute prior art.

### SUMMARY

Aspects on one or more embodiments of the present invention are directed to a secondary battery capable of increasing a welding depth by connecting a terminal and a current collector by butt welding, and a battery pack including the same.

Additional aspects will be set forth in part in the description which follows and, in part, will be apparent from the description, or may be learned by practice of the presented embodiments of the invention.

According to the present invention, there is provided a secondary battery including a case, an electrode assembly accommodated in the case, a cap plate arranged to face the electrode assembly, a pair of terminals on the cap plate, the terminals having different polarities, a current collector connected to the electrode assembly and configured to pass (to extend) through a first terminal of the terminals, and a welded portion between the current collector and the first terminal.

In one or more embodiments, the current collector may include a current collecting plate arranged between the electrode assembly and the cap plate and connected to the electrode assembly and a current collecting protrusion portion protruding from the current collecting plate in a first direction and passing through the first terminal.

In one or more embodiments, the first terminal may include a terminal body portion, the terminal body portion defining a terminal hole portion passing (extending) through the terminal body portion in the first direction, and the current collecting protrusion portion may pass (extend) through the terminal hole portion.

In one or more embodiments, the welded portion may be between the current collecting protrusion portion and the terminal body portion.

In one or more embodiments, a width of the terminal body portion obtained by subtracting a diameter of the terminal hole portion from a width of the terminal body portion parallel to a second direction intersecting the first direction may be greater than a thickness of the terminal body portion parallel to the first direction.

In one or more embodiments, the width of the terminal body portion may be 1.5 times or more than the thickness of the terminal body portion and the width of the terminal body portion may be 6 mm or less.

In one or more embodiments, a thickness of the terminal body portion parallel to the first direction may be 2.5 mm or more and 4 mm or less.

In one or more embodiments, the current collecting protrusion portion may include a first surface extending from the current collecting plate and a second surface that is arranged to intersect the first surface and exposable (*e.g.,* exposed) at the terminal.

In one or more embodiments, a thickness of the first surface may be equal to or greater than a width of the welded portion parallel to the second direction.

In one or more embodiments, the thickness of the first surface may be 1.5 mm or less.

In one or more embodiments, a thickness of the second surface parallel to the first direction may be equal to or greater than a width of the welded portion parallel to the second direction intersecting the first direction.

In one or more embodiments, the thickness of the second surface may be 1.5 mm or less.

In one or more embodiments, the secondary battery may further include an insulating plate arranged between the cap plate and the electrode assembly and spaced and/or apart (*e.g.,* spaced apart or separated) from the current collecting plate.

In one or more embodiments, a separation distance between the insulating plate and the current collecting plate may be 0.5 mm or more and 1 mm or less.

In one or more embodiments, the secondary battery may further include a gasket arranged between the cap plate and the first terminal.

In one or more embodiments, the first terminal may further include a terminal extension portion that extends from the terminal body portion, the terminal extension portion defining the terminal hole portion together with the terminal body portion, and a terminal pressing portion that presses (*e.g.,* holds) the gasket to the cap plate.

In one or more embodiments, a thickness of the terminal pressing portion parallel to the first direction may be 1 mm or more and 1.5 mm or less.

In one or more embodiments, the terminal pressing portion may be arranged spaced and/or apart (*e.g.,* spaced apart or separated) from the current collecting plate in the first direction.

In one or more embodiments, a separation distance between the terminal pressing portion and the current collecting plate may be 0.5 mm or more and 1 mm or less.

According to the present invention, there is provided a battery pack including a housing and a plurality of secondary batteries arranged inside the housing, in which each of the secondary batteries includes a case, an electrode assembly accommodated in the case, a cap plate arranged to face the electrode assembly, a pair of terminals on the cap plate, the terminals having different polarities, a current collector connected to the electrode assembly and configured to pass (extend) through a first terminal of the terminals, and a welded portion between the current collector and the first terminal.

### BRIEF DESCRIPTION OF THE DRAWINGS

The accompanying drawings are included to provide a further understanding of the present invention and are incorporated in and constitute a part of this specification. The drawings illustrate example embodiments of the present invention and, together with the description, serve to explain principles of the present invention. In the drawings:
FIG. 1 is a perspective view schematically illustrating a battery pack according to one or more embodiments of the present invention;
FIG. 2 is a perspective view schematically illustrating a secondary battery of the battery pack of FIG. 1, according to one or more embodiments of the present invention;
FIG. 3 is an exploded perspective view schematically illustrating the secondary battery of FIG. 2, according to one or more embodiments of the present invention;
FIG. 4 is a view schematically illustrating an electrode assembly of the secondary battery of FIG. 3, according to one or more embodiments of the present invention;
FIG. 5 is a plan view schematically illustrating the secondary battery of FIG. 3, according to one or more embodiments of the present invention;
FIG. 6 is a partially enlarged cross-sectional view schematically illustrating a terminal portion of the secondary battery of FIG. 3, according to one or more embodiments of the present invention; and
FIG. 7 is a partially enlarged cross-sectional view schematically illustrating a terminal portion of a secondary battery, according to one or more embodiments of the present invention.

### DETAILED DESCRIPTION

The present invention may be modified in many alternate forms, and thus specific embodiments will be illustrated in the drawings and described in more detail. It should be understood, however, that this is not intended to limit the present invention to the particular forms disclosed, but rather, is intended to cover all modifications, equivalents, and alternatives falling within the spirit and scope of the present invention.

Hereinafter, example embodiments will be described in more detail with reference to the accompanying drawings. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

It will be understood that when an element, such as an area, layer, film, region or portion, is referred to as being "on," "connected to," or "coupled to" another element, it can be directly on, connected to, or coupled to the other element, or one or more intervening elements may be present. In contrast, when an element or layer is referred to as being "directly on," "directly connected to", "directly coupled to", or "immediately adjacent to" another element or layer, there are no intervening elements or layers present. In addition, it will also be understood that when an element is referred to as being "between" two elements, it can be the only element between the two elements, or one or more intervening elements may also be present.

In the drawings, dimensions of the one or more suitable elements, layers, and/or the like may be exaggerated for clarity of illustration. Unless otherwise noted, like reference numerals denote like elements throughout the attached drawings and the written description, and thus, duplicative descriptions thereof may not be provided.

As used herein, the term "and/or" includes any and all combinations of one or more of the associated listed items. Further, the use of "may" when describing embodiments of the present invention refers to "one or more embodiments of the present invention." Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c,"one from among a, b, and c", "at least one of a to c" indicates only a, only b, only c, both a and b, both a and c, both b and c, all of a, b, and c, or variations thereof. . As used herein, the terms "use," "using," and "used" may be considered synonymous with the terms "utilize," "utilizing," and "utilized," respectively.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value..

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present invention.

Spatially relative terms, such as "on," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the drawings. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (*e.g.,* rotated 90 degrees or at other orientations) and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, *etc.* as being "the same" refer to the two elements, features, *etc.* being the same or substantially the same. Thus, the phrase "the same" or "substantially the same" may include a case having a deviation that is considered low in the art, for example, a deviation of 5% or less. In addition, when a certain parameter is referred to as being uniform in a given region, it may refer to that it is uniform in terms of an average.

Throughout the specification, unless otherwise stated, each element may be singular or plural.

When an element is referred to as being arranged (or located or positioned) on the "above (or below)" or "on (or under)" a component, it may refer to that the element is placed in contact with the upper (or lower) surface of the component and may also refer to that another component may be interposed between the component and any element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it refers to A, B, or A and B, unless otherwise stated. That is, "and/or" includes any or all combinations of a plurality of items enumerated. When "C to D" is stated, it refers to C or more and D or less, unless otherwise specified.

The terms used in the present specification are for describing embodiments of the present invention and are not intended to limit the present invention.

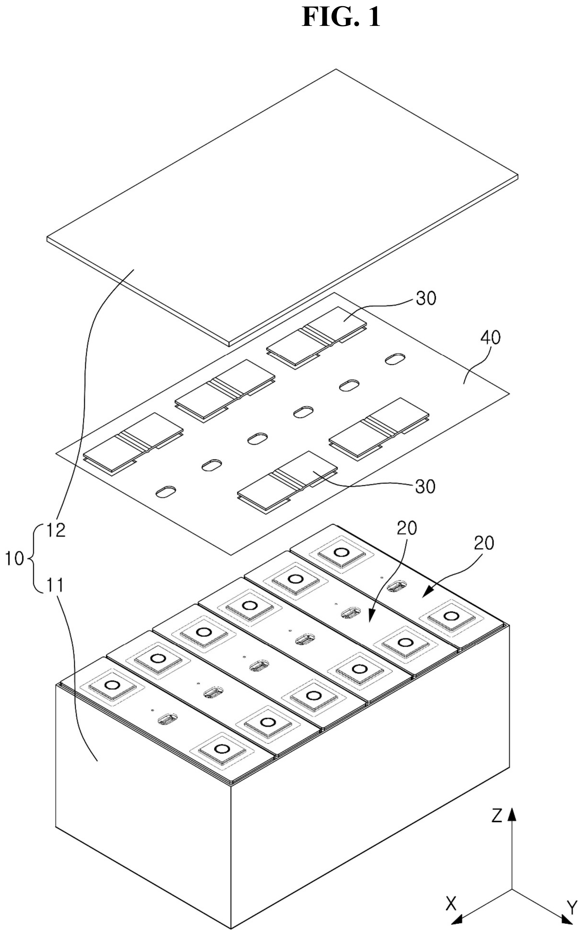

FIG. 1 is a perspective view schematically illustrating a configuration of a battery pack according to one or more embodiments of the present invention.

Referring to FIG. 1, the battery pack according to one or more embodiments may include a housing 10, a secondary battery 20, and a bus bar 30.

The housing 10 may form an approximate exterior of the battery pack and may provide a space in which the secondary battery 20 may be accommodated. The housing 10 may include a housing body 11 and a housing cover 12.

The housing body 11 may be formed to have the shape of a box with an empty interior and one open side. A cross-sectional shape of the housing body 11 is not limited to the quadrangle illustrated in FIG. 1, and the design thereof may be changed to one or more suitable shapes, such as a polygonal, circular, or oval shape.

The housing cover 12 may be connected to the housing body 11, and may close the internal space of the housing body 11. For example, the housing cover 12 may be formed to have an approximately plate-shaped form and may be arranged to face the open side of the housing body 11.

The housing cover 12 may be fixed to the housing body 11 by one or more suitable types (kinds) of coupling methods, such as bolting, welding, fitting, and/or the like.

The secondary battery 20 may function as a unit structure that stores and supplies electrical power in the battery pack. The secondary battery 20 may be arranged inside the housing 10.

A plurality of secondary batteries 20 may be provided. The plurality of secondary batteries 20 may be arranged in two or more rows in at least one of a longitudinal direction (an X-axis direction based on FIG. 1) or a width direction (a Y-axis direction based on FIG. 1) of the housing 10.

Although FIG. 1 illustrates an example in which the plurality of secondary batteries 20 are arranged in six rows in the longitudinal direction of the housing 10, the arrangement of the plurality of secondary batteries 20 is not limited thereto and the design thereof may be changed to one or more suitable forms.

The plurality of secondary batteries 20 may be arranged parallel to each other. The number of secondary batteries 20 may be designed to vary depending on the size, shape, and/or the like of the housing 10.

The plurality of secondary batteries 20 may be electrically connected by the bus bar 30.

The bus bar 30 according to one or more embodiments may be arranged between the housing cover 12 and the secondary battery 20.

A plurality of bus bars 30 may be provided. Each bus bar 30 may connect a pair of neighboring secondary batteries 20 in series or in parallel.

The bus bar 30 may be formed of an electrically conductive material such as copper, aluminum, nickel, and/or the like. The specific shape of the bus bar 30 is not limited to that shown in FIG. 1, and the design thereof may be changed to one or more suitable shapes that may electrically connect neighboring secondary batteries 20.

The plurality of bus bars 30 may be supported inside the housing 10 by a bus bar holder 40.

The bus bar holder 40 according to one or more embodiments may be formed to have a flat shape. The bus bar holder 40 may be arranged between the housing cover 12 and the secondary battery 20.

The bus bars 30 may be fixed to the bus bar holder 40 by one or more suitable types (kinds) of coupling methods, such as fitting, bolting, injection coupling, and/or the like. The bus bar holder 40 may be configured to include an electrically insulating polymer compound material.

Hereinafter, the secondary battery 20 according to one or more embodiments of the present invention will be described.

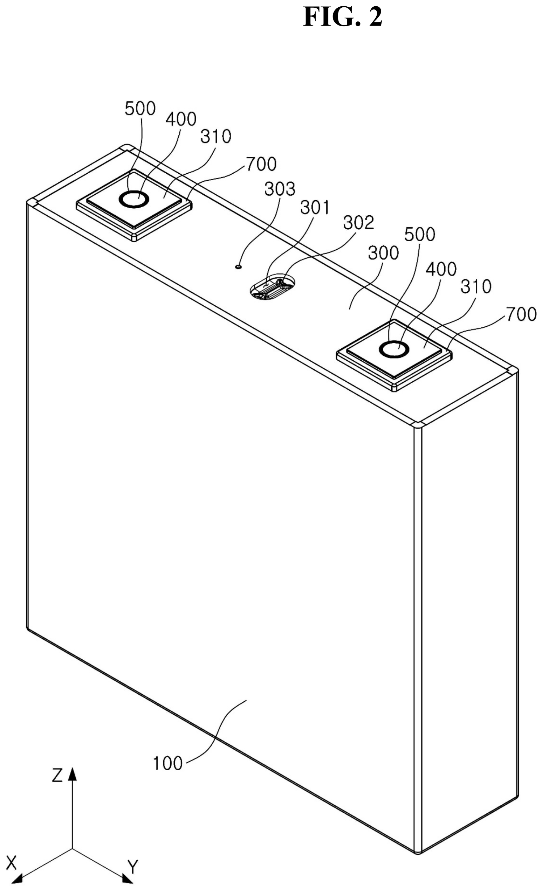

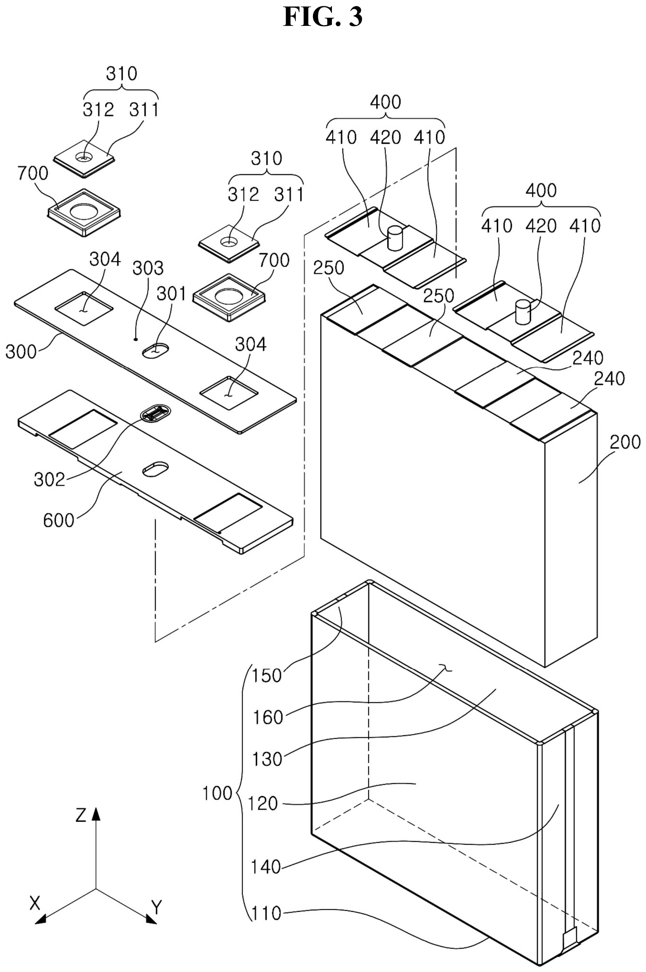

FIG. 2 is a perspective view schematically illustrating a configuration of a secondary battery, according to one or more embodiments of the present invention, and FIG. 3 is an exploded perspective view schematically illustrating the configuration of the secondary battery, according to one or more embodiments of the present invention.

Hereinafter, an example in which the secondary battery 20 is a prismatic lithium-ion secondary battery will be described. However, the present invention is not limited thereto, and the secondary battery 20 may be a lithium polymer battery or a cylindrical battery.

Referring to FIGS. 1 to 3, the secondary battery 20 according to the one or more embodiments may include a case 100, an electrode assembly 200, a cap plate 300, a current collector 400, and a welded portion 500.

The case 100 may form an approximate exterior of the secondary battery 20 and may accommodate the electrode assembly 200. The case 100 may include a bottom portion 110, a front surface portion 120, a rear surface portion 130, a first side portion 140, and a second side portion 150.

The bottom portion 110 may form the exterior of a lower side (*see, e.g.,* FIG. 3) of the case 100. The bottom portion 110 according to one or more embodiments may have the shape of a rectangular plate. The bottom portion 110 may be seated on a bottom surface of the housing body 11.

The front surface portion 120, the rear surface portion 130, the first side portion 140, and the second side portion 150 may form a peripheral outer surface of the case 100.

The front surface portion 120, the rear surface portion 130, the first side portion 140, and the second side portion 150 may have the shape of a plate extending upward (*see, e.g.,* FIG. 3) from edges of the bottom portion 110.

The front surface portion 120, the rear surface portion 130, the first side portion 140, and the second side portion 150 may be arranged to be around *(*e.g., surround) an upper space of the bottom portion 110. The front surface portion 120, the rear surface portion 130, the first side portion 140, and the second side portion 150 may be arranged to form a rectangular cross-sectional shape.

The front surface portion 120 and the rear surface portion 130 may be arranged to face each other in the longitudinal direction of the housing 10 (the X-axis direction based on FIG. 1). The front surface portion 120 and the rear surface portion 130 may be arranged parallel to each other. Areas of the front surface portion 120 and the rear surface portion 130 may be the same.

The first side portion 140 and the second side portion 150 may be arranged to face each other in the width direction of the housing 10 (the Y-axis direction based on FIG. 1). The first side portion 140 and the second side portion 150 may be arranged parallel to each other.

Areas of the first side portion 140 and the second side portion 150 may be the same. The areas of the first side portion 140 and the second side portion 150 may be smaller than the areas of the front surface portion 120 and the rear surface portion 130.

The case 100 may further include an opening 160. The opening 160 may refer to a space surrounded by upper end portions of the front surface portion 120, the rear surface portion 130, the first side portion 140, and the second side portion 150. The opening 160 may interconnect an internal space and an external space of the case 100.

Accordingly, the case 100 according to one or more embodiments may have a rectangular parallelepiped shape with an open upper side (*see, e.g.,* FIG. 3).

A first direction described in more detail below may refer to a direction parallel to a Z-axis based on FIGS. 2 and 3, and from the bottom portion 110 toward the opening 160. A second direction may refer to a direction parallel to the Y-axis based on FIGS. 2 and 3, and from the second side portion 150 toward the first side portion 140. A third direction may refer to a direction parallel to the X-axis based on FIGS. 2 and 3, and from the rear surface portion 130 toward the front surface portion 120.

The electrode assembly 200 may function as a unit structure that performs charging and discharging operations of electric power in the secondary battery 20. The electrode assembly 200 may be accommodated inside the case 100.

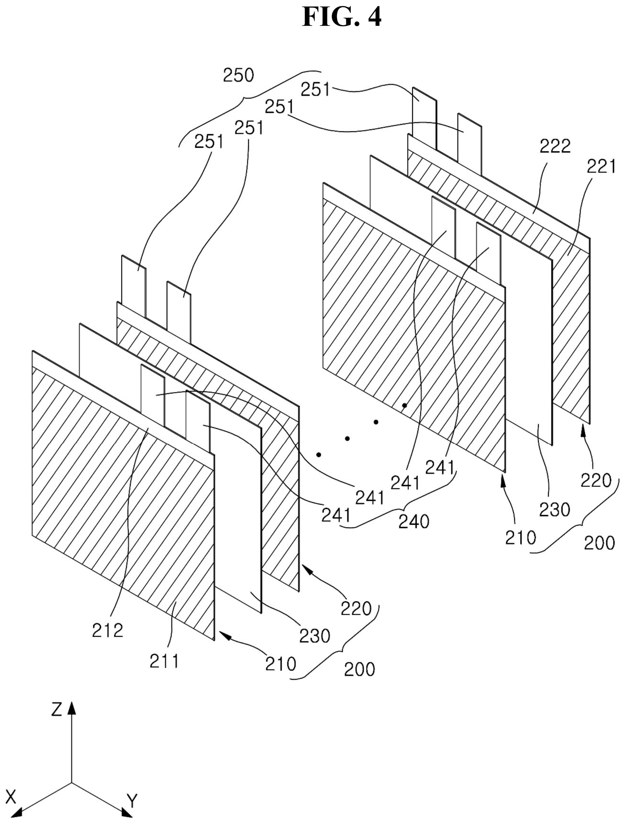

FIG. 4 is a view schematically illustrating a configuration of the electrode assembly, according to one or more embodiments of the present invention.

Referring to FIGS. 1 to 4, the electrode assembly 200 according to one or more embodiments may include a first electrode 210, a second electrode 220, and a separator 230 arranged between the first electrode 210 and the second electrode 220. A plurality of first electrodes 210, a plurality of separators 230, and a plurality of second electrodes 220 may be provided.

Hereinafter, the electrode assembly 200 having a stacked form in which the plurality of first electrodes 210, separators 230, and second electrodes 220 are sequentially stacked in the third direction will be described as an example. However, the electrode assembly 200 is not limited to this shape, and may also be formed to have the shape in which the first electrode 210, the separator 230, and the second electrode 220 are wound clockwise or counterclockwise around a winding axis in a state of being stacked.

The first electrode 210 may function as one of a positive electrode or a negative electrode of the electrode assembly 200. Hereinafter, the first electrode 210 will be described as being the positive electrode of the electrode assembly 200 as an example. However, the first electrode 210 is not limited thereto, and may also function as the negative electrode of the electrode assembly 200.

The first electrode 210 according to one or more embodiments may be formed to have the shape of a foil including a metal material such as aluminum or an aluminum alloy.

The first electrode 210 is not particularly limited in type (kind), size, shape, and/or the like, as long as the material is conductive without causing chemical changes in the secondary battery 20.

The design of the cross-sectional shape of the first electrode 210 may be changed to one or more suitable shapes other than the rectangular shape illustrated in FIG. 4.

A plurality of first electrodes 210 may be provided. The plurality of first electrodes 210 may be arranged in the third direction between the front surface portion 120 and the rear surface portion 130 of the case 100. The number of first electrodes 210 may be designed to vary depending on the charging capacity and/or the like of the secondary battery 20.

A first active material layer 211 may be applied to at least a portion of the first electrode 210. The first active material layer 211 may be applied to both surfaces (e.g., opposite surfaces) of the first electrode 210, or alternatively, may be applied to only one surface of the first electrode 210.

In one or more embodiments, as the first electrode 210 functions as the positive electrode, the first active material layer 211 may include a positive electrode active material.

The positive electrode active material may be a compound capable of reversible intercalation and deintercalation of lithium (a lithiated intercalation compound). For example, one or more types (kinds) of a composite oxide of lithium and a metal selected from among cobalt, manganese, nickel, iron, and/or a (*e.g.,* any suitable) combination thereof may be used.

For example, the positive electrode active material may include at least one of lithium-iron-phosphorus oxide (LiFePO₄, LFP), lithium-manganese-iron-phosphorus oxide (LiMnFePO₄, LMFP), and/or lithium-nickel-cobalt-manganese oxide (LiNiₓCoyMnzO₂, NCM). Here, 0<x<1, 0<y<1, 0<z<1, x+y+z=1 may be satisfied.

The positive electrode active material may include only one of lithium-iron-phosphorus oxide (LiFePO₄, LFP), lithium-manganese-iron-phosphorus oxide (LiMnFePO₄, LMFP), or lithium-nickel-cobalt-manganese oxide (LiNiₓCo_{y}MnzO₂, NCM), or may include two or all of lithium-iron-phosphorus oxide (LiFePO₄, LFP), lithium-manganese-iron-phosphorus oxide (LiMnFePO₄, LMFP), and/or lithium-nickel-cobalt-manganese oxide (LiNixCoyMnzO2, NCM).

The first active material layer 211 may further include a positive electrode conductive material.

The positive electrode conductive material is used to impart conductivity to the first active material layer 211, and any material which does not cause a chemical change and is electronically conductive may be used.

Examples of the positive electrode conductive material may include a carbon-based material such as natural graphite, artificial graphite, carbon black, acetylene black, Ketjen black, carbon fibers, carbon nanofibers, carbon nanotubes, and/or the like, a metal-based material in the form of metal powder or metal fibers containing copper, nickel, aluminum, silver, and/or the like, a conductive polymer such as a polyphenylene derivative and/or the like, and/or a (*e.g.,* any suitable) mixture thereof.

The first active material layer 211 may further include a positive electrode binder.

The positive electrode binder serves to attach the particles constituting the positive electrode active material to each other well, and also attach the positive electrode active material to the first electrode 210 well.

Examples of the positive electrode binder may include a non-aqueous binder, an aqueous binder, a dry binder, and/or a (*e.g.,* any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (*e.g.,* any suitable) combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and/or a (*e.g.,* any suitable) combination thereof.

When the aqueous binder is used as the positive electrode binder, a cellulose-based compound capable of imparting viscosity may be further included. As the cellulose-based compound, one or more types (kinds) of carboxymethyl cellulose, hydroxypropyl methyl cellulose, methyl cellulose, and/or alkali metal salts thereof may be used in combination. Na, K, and/or Li may be used as the alkali metal.

The dry binder is a polymer material capable of fiberization and may be, for example, polytetrafluoroethylene, polyvinylidene fluoride, a polyvinylidene fluoride-hexafluoropropylene copolymer, polyethylene oxide, and/or a (*e.g.,* any suitable) combination thereof.

The first electrode 210 may include a first uncoated portion 212 at (to) which the first active material layer 211 is not applied.

The first uncoated portion 212 according to one or more embodiments may be arranged in an upper end region of the first electrode 210 arranged to face the opening 160 inside the case 100. However, the first uncoated portion 212 is not limited to this form, and may be formed over the entire edge region of the first electrode 210.

The second electrode 220 may function as the other of the positive electrode or the negative electrode of the electrode assembly 200. Hereinafter, the second electrode 220 will be described as being the negative electrode of the electrode assembly 200 as an example. However, the second electrode 220 is not limited thereto, and may also function as the positive electrode of the electrode assembly 200 when the first electrode 210 is the negative electrode.

A plurality of second electrodes 220 may be provided. The plurality of second electrodes 220 may be arranged in the third direction between the front surface portion 120 and the rear surface portion 130 of the case 100.

The first electrode 210 and the second electrode 220 may be alternately arranged in the third direction. The second electrode 220 may be spaced a set interval apart from the first electrode 210 in the third direction.

The second electrode 220 according to one or more embodiments may be formed to have the shape of a foil including a metal material such as copper, a copper alloy, nickel, or a nickel alloy.

The second electrode 220 is not particularly limited in type (kind), size, shape, and/or the like as long as the material is conductive without causing chemical changes in the secondary battery 20.

The design of the cross-sectional shape of the second electrode 220 may be changed to one or more suitable shapes other than the rectangular shape illustrated in FIG. 4.

A second active material layer 221 may be applied to at least a portion of the second electrode 220. The second active material layer 221 may be applied to both surfaces (*e.g.,* opposite surfaces) of the second electrode 220, or alternatively, may be applied to only one surface of the second electrode 220.

As the second electrode 220 functions as the negative electrode, the second active material layer 221 may include a negative active material.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, and/or a (*e.g.,* any suitable) combination thereof.

An example of crystalline carbon may be graphite such as amorphous, plate-shaped, flaky, spherical, or fibrous natural graphite or artificial graphite, and examples of amorphous carbon may include soft carbon or hard carbon, mesophase pitch carbide, calcined coke, and/or the like.

An alloy of lithium and a metal selected from among Na, K, Rb, Cs, Fr, Be, Mg, Ca, Sr, Si, Sb, Pb, In, Zn, Ba, Ra, Ge, Al, and/or Sn may be used as the alloy of lithium and a metal.

An Si-based negative electrode active material or Sn-based negative electrode active material may be used as the material capable of doping and dedoping lithium. The Si-based negative electrode active material may be silicon, a silicon-carbon composite, SiOₓ (0 < x < 2), an Si-Q alloy (the Q is selected from among an alkali metal, an alkaline earth metal, a Group 13 element, a Group 14 element (excluding Si), a Group 15 element, a Group 16 element, a transition metal, a rare earth element, and/or a (*e.g.,* any suitable) combination thereof), and/or a (*e.g.,* any suitable) combination thereof. The Sn-based negative electrode active material may be Sn, SnO2, an Sn-based alloy, and/or a (*e.g.,* any suitable) combination thereof.

The silicon-carbon composite may be a composite of silicon and amorphous carbon. The silicon-carbon composite may be in the form of silicon particles whose surfaces are coated with amorphous carbon. For example, the silicon-carbon composite may include a secondary particle (a core) in which silicon primary particles are assembled, and an amorphous carbon coating layer (a shell) located on the surface of the secondary particle.

The amorphous carbon may also be located between the silicon primary particles, and for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with a carbon-based negative electrode active material.

The second active material layer 221 may further include a negative electrode conductive material and a negative electrode binder.

The negative electrode conductive material is used to impart conductivity to the second active material layer 221, and any material which does not cause a chemical change and is electronically conductive may be used.

Examples of the negative electrode conductive material may include a carbon-based material such as natural graphite, artificial graphite, carbon black, acetylene black, Ketjen black, carbon fibers, carbon nanofibers, carbon nanotubes, and/or the like, a metal-based material in the form of metal powder or metal fibers containing copper, nickel, aluminum, silver, and/or the like, a conductive polymer such as a polyphenylene derivative and/or the like, and/or a (*e.g.,* any suitable) mixture thereof.

The negative electrode binder serves to attach the particles constituting the negative electrode active material to each other well, and also attach the negative electrode active material to the second electrode 220 well.

Example of the negative electrode binders include a non-aqueous binder, an aqueous binder, a dry binder, and/or a (*e.g.,* any suitable) combination thereof.

The non-aqueous binder may be polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (*e.g.,* any suitable) combination thereof.

The aqueous binder may be selected from among styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and/or a (*e.g.,* any suitable) combination thereof.

When the aqueous binder is used as the negative electrode binder, a cellulose-based compound capable of imparting viscosity may be further included. As the cellulose-based compound, one or more types (kinds) of carboxymethyl cellulose, hydroxypropyl methyl cellulose, methyl cellulose, or alkali metal salts thereof may be used in combination. Na, K, and/or Li may be used as the alkali metal.

The dry binder is a polymer material capable of fiberization and may be, for example, polytetrafluoroethylene, polyvinylidene fluoride, a polyvinylidene fluoride-hexafluoropropylene copolymer, polyethylene oxide, and/or a (*e.g.,* any suitable) combination thereof.

The second electrode 220 may include a second uncoated portion 222 to which the second active material layer 221 is not applied.

The second uncoated portion 222 according to one or more embodiments may be arranged in an upper end region of the second electrode 220 arranged to face the opening 160 inside the case 100. However, the second uncoated portion 222 is not limited to this form, and may be formed over the entire edge region of the second electrode 220.

The separator 230 may be arranged between the first electrode 210 and the second electrode 220. The separator 230 may perform a function of preventing or reducing the likelihood of a short circuit between the first electrode 210 and the second electrode 220 while allowing movement of lithium ions between the first electrode 210 and the second electrode 220.

The separator 230 may be arranged to entirely be around (*e.g.,* surround) a surface region of the electrode assembly 200. Accordingly, the separator 230 may prevent or reduce the likelihood of the first electrode 210 and the second electrode 220 being directly exposed to the outside of the electrode assembly 200.

As the separator 230, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, and/or the like may be used.

The separator 230 may include a porous substrate and a coating layer containing an organic material, an inorganic material, and/or a (*e.g.,* any suitable) combination thereof located on one surface or both surfaces (*e.g.,* opposite surfaces) of the porous substrate.

The porous substrate may be a polymer film formed of one polymer selected from among polyolefins such as polyethylene and polypropylene, polyesters such as polyethylene terephthalate and polybutylene terephthalate, polyacetal, polyamide, polyimide, polycarbonate, polyether ketone, polyaryl ether ketone, polyetherimide, polyamideimide, polybenzimidazole, polyether sulfone, polyphenylene oxide, a cyclic olefin copolymer, polyphenylene sulfide, polyethylene naphthalate, glass fiber, and/or polytetrafluoroethylene (*e.g.,* TEFLON^{®} or a copolymer or a (*e.g.,* any suitable) mixture of two or more thereof.

The organic material may include a polyvinylidene fluoride polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (*e.g.,* any suitable) combination thereof, but the present invention is not limited thereto.

The organic material and the inorganic material may be present as a mixture in one coating layer, or present in a form in which a coating layer containing an organic material and a coating layer containing an inorganic material are stacked.

The electrode assembly 200 according to one or more embodiments may further include a first electrode tab 240 and a second electrode tab 250.

The first electrode tab 240 may be connected to the first electrode 210, and may protrude outwardly from the electrode assembly 200. As the first electrode 210 is described as the positive electrode, the first electrode tab 240 may function as a positive electrode tab of the secondary battery 20. However, the first electrode tab 240 is not limited thereto, and if (*e.g.,* when) the first electrode 210 is a negative electrode, the first electrode tab may function as a negative electrode tab of the secondary battery 20.

The first electrode tab 240 according to one or more embodiments may extend from the electrode assembly 200 in the first direction. For example, the first electrode tab 240 may extend toward the opening 160 from the inside of the case 100.

A plurality of first electrode tabs 240 according to one or more embodiments may be provided. The plurality of first electrode tabs 240 may be spaced and/or apart (*e.g.,* spaced apart or separated) in the second direction. FIG. 3 shows that two first electrode tabs 240 are formed by way of example, but the number of first electrode tabs 240 is not limited thereto, and the design thereof may be changed to one or more suitable numbers, such as three, four, and/or the like.

The first electrode tab 240 may include a first tab member 241.

The first tab member 241 according to one or more embodiments may have the shape of a foil extending in the first direction from the first uncoated portion 212 of the first electrode 210.

The first tab member 241 may have an approximately rectangular shape. However, the shape of the first tab member 241 is not limited thereto, and the design thereof may be changed to one or more suitable shapes.

The first tab member 241 may be formed integrally with the first electrode 210. For example, the first tab member 241 may be the remaining area of the first uncoated portion 212 that remains after a portion of the first uncoated portion 212 is cut or removed by notching processing and/or the like. In contrast, the first tab member 241 may be manufactured separately from the first electrode 210 and then connected to the first uncoated portion 212 by welding and/or the like. The material of the first tab member 241 may be the same as the material of the first electrode 210.

A plurality of first tab members 241 may be provided. The number of first tab members 241 may be the same as the number of first electrodes 210. Each first tab member 241 may individually extend from the first uncoated portion 212 of a different first electrode 210. However, the present invention is not limited thereto and each of the first electrodes 210 may have more than one first tab member 241, for example, each may have two first tab members 241.

The neighboring first tab members 241 may be arranged to face each other in the third direction. The neighboring first tab members 241 may be arranged parallel to each other.

Accordingly, the first electrode tab 240 according to one or more embodiments may be an assembly of a plurality of first tab members 241 stacked in the third direction. The neighboring first tab members 241 may be in contact with each other and may also be spaced and/or apart (*e.g.,* spaced apart or separated) by the thickness of the separator 230.

The second electrode tab 250 may be connected to the second electrode 220 and may protrude outwardly from the electrode assembly 200. As the second electrode 220 is described as the negative electrode, the second electrode tab 250 may function as the negative electrode tab of the secondary battery 20. However, the second electrode tab 250 is not limited thereto, and if (*e.g.,* when) the second electrode 220 is a positive electrode, the second electrode tab may function as a positive electrode tab of the secondary battery 20.

The second electrode tab 250 according to one or more embodiments may extend from the electrode assembly 200 in the first direction. For example, the second electrode tab 250 may extend toward the opening 160 from the inside of the case 100.

The first electrode tab 240 and the second electrode tab 250 may be arranged spaced and/or apart (*e.g.,* spaced apart or separated) from each other in the second direction. For example, the second electrode tab 250 may be arranged at a position spaced and/or apart (*e.g.,* spaced apart or separated) from the first electrode tab 240 at a set interval in the second direction.

A plurality of second electrode tabs 250 according to one or more embodiments may be provided. The plurality of second electrode tabs 250 may be spaced and/or apart (*e.g.,* spaced apart or separated) in the second direction.

FIG. 3 shows that two second electrode tabs 250 are formed by way of example, but the number of second electrode tabs 250 is not limited thereto, and the design thereof may be changed to one or more suitable numbers, such as three, four, and/or the like.

The second electrode tab 250 may include a second tab member 251.

The second tab member 251 according to one or more embodiments may have the shape of a foil extending in the first direction from the second uncoated portion 222 of the second electrode 220.

The second tab member 251 may have an approximately rectangular shape. However, the shape of the second tab member 251 is not limited thereto, and the design thereof may be changed to one or more suitable shapes.

The second tab member 251 may be formed integrally with the second electrode 220. For example, the second tab member 251 may be the remaining area of the second uncoated portion 222 that remains after a portion of the second uncoated portion 222 is cut or removed by notching processing and/or the like. In contrast, the second tab member 251 may be manufactured separately from the second electrode 220 and then connected to the second uncoated portion 222 by welding and/or the like. The material of the second tab member 251 may be the same as the material of the second electrode 220.

A plurality of second tab members 251 may be provided. The number of second tab members 251 may be the same as the number of second electrodes 220. Each second tab member 251 may individually extend from the second uncoated portion 222 of a different second electrode 220. However, the present invention is not limited thereto and each of the second electrodes 220 may have more than one second tab member 251, for example, each may have two second tab members 251.

The neighboring second tab members 251 may be arranged to face each other in the third direction. The neighboring second tab members 251 may be arranged parallel to each other.

Accordingly, the second electrode tab 250 according one or more embodiments may be an assembly of a plurality of second tab members 251 stacked in the third direction. The neighboring second tab members 251 may be in contact with each other and may also be spaced and/or apart (*e.g.,* spaced apart or separated) by the thickness of the separator 230.

The cap plate 300 may be coupled to the case 100 to seal the case 100.

The cap plate 300 according to one or more embodiments may be formed to have a flat plate shape (*e.g.,* in a form of plates). The cap plate 300 may be arranged in the opening 160 of the case 100.

The cap plate 300 may be arranged to face the electrode assembly 200 in the first direction. For example, the cap plate 300 may be arranged at a position spaced and/or apart (*e.g.,* spaced apart or separated) from the electrode assembly 200 at a set distance in the first direction. The cap plate 300 may be arranged parallel to the bottom portion 110 of the case 100.

The cap plate 300 may be seated on an upper end of the case 100, for example, on upper ends of the front surface portion 120, the rear surface portion 130, the first side portion 140, and the second side portion 150. The cap plate 300 may be fixed to the case 100 by one or more suitable types (kinds) of coupling methods, such as welding, bolting, fitting, and/or the like.

A lower surface of the cap plate 300 may be arranged to face the electrode assembly 200. The lower surface of the cap plate 300 may be arranged to face an upper surface of the electrode assembly 200 from which the first electrode tab 240 and the second electrode tab 250 protrude.

An upper surface of the cap plate 300 may be arranged to face the external space of the case 100.

The cap plate 300 according to one or more embodiments may be provided with a vent hole 301 and a vent 302.

The vent hole 301 may be formed to have the shape of a hole that vertically passes through the cap plate 300 in the first direction. The vent hole 301 may provide a path for flames, gas, smoke, and/or the like generated inside the case 100 to be discharged to the outside of the case 100 if (*e.g.,* when) the secondary battery 20 experiences thermal runaway due to overcurrent and/or the like. The design of the cross-sectional shape of the vent hole 301 may be changed to one or more suitable shapes such as an ellipse, a circle, a polygon, and/or the like.

The vent 302 may be provided in the vent hole 301 and opened and closed in conjunction with changes in the internal pressure of the case 100. For example, the vent 302 may close the vent hole 301 during normal operation of the secondary battery 20 to prevent or reduce the likelihood of an electrolyte and/or the like inside the case 100 leaking out of the case 100, or to prevent or reduce the likelihood of moisture, foreign substances, and/or the like entering the case 100.

The vent 302 may open the vent hole 301 during thermal runaway of the secondary battery 20 to allow flames, gas, smoke, and/or the like generated inside the case 100 to be discharged to the outside of the case 100.

The vent 302 may be formed to have an approximately plate-shaped form. The vent 302 may be fixed to the cap plate 300 by one or more suitable types (kinds) of coupling methods, such as welding, bolting, fitting, and/or the like.

The vent 302 may be arranged inside the vent hole 301, or may be arranged to face the vent hole 301 in the first direction on the upper and/or lower side of the cap plate 300.

The thickness of the vent 302 parallel to the first direction may be smaller than the thickness of the cap plate 300. Accordingly, the vent 302 may easily rupture or break if (*e.g.,* when) the internal pressure of the case 100 increases.

The vent 302 may include a notch formed concavely on the inside of the vent 302 to be ruptured if (*e.g.,* when) the internal pressure of the case 100 increases.

According to one or more embodiments, the cap plate 300 may have an electrolyte injection port 303 that is formed through the cap plate 300 and in which a sealing plug may be installed.

The electrolyte injection port 303 may be arranged spaced a set interval apart from the vent hole 301 in the second direction or in a direction opposite to the second direction.

A plate hole 304 may be formed in the cap plate 300 according to one or more embodiments (*see, e.g.,* FIG. 3). The plate hole 304 may have the shape of a hole passing (*e.g.,* extending) through the cap plate 300 in the first direction.

A pair of plate holes 304 may be provided. The pair of plate holes 304 may be arranged spaced a set interval apart in the second direction. The vent hole 301 and the electrolyte injection port 303 may be arranged between the pair of plate holes 304.

A terminal 310 may be provided on the cap plate 300 according to one or more embodiments of the present invention.

The terminal 310 may function as a component that provides electrical connection of the secondary battery 20 to the bus bar 30 or an external power device.

The terminal 310 according to one or more embodiments may be formed of an electrically conductive material such as aluminum, nickel, copper, and/or the like. The terminal 310 may include a terminal body portion 311 and a terminal hole portion 312.

The terminal body portion 311 may form an overall exterior of the terminal 310 and may protrude outwardly from the cap plate 300. For example, the terminal body portion 311 may be arranged at a position spaced and/or apart (*e.g.,* spaced apart or separated) from the upper surface of the cap plate 300 at a set distance in the first direction. A lower surface of the terminal body portion 311 may be arranged to face the plate hole 304 formed by passing through the cap plate 300.

The cross-sectional area of the terminal body portion 311 may be larger than the cross-sectional area of the plate hole 304. In FIG. 3, the terminal body portion 311 is illustrated as having a rectangular cross-sectional shape as an example, but the cross-sectional shape of the terminal body portion 311 is not limited thereto and the design thereof may be changed to one or more suitable shapes such as a circle, an ellipse, a polygon, and/or the like.

The terminal hole portion 312 may be provided in the terminal body portion 311. The terminal hole portion 312 may be formed by passing (*e.g.,* extending) through a central portion of the terminal body portion 311 in the first direction.

In FIG. 3, the terminal hole portion 312 is illustrated as having a circular cross-sectional shape, but the cross-sectional shape of the terminal hole portion 312 is not limited to thereto and the design thereof may be changed to one or more suitable shapes such as an ellipse, a polygon, and/or the like. A current collecting protrusion portion 420 of the current collector 400 described in more detail below may pass (*e.g.,* extend) through the terminal hole portion 312 in the first direction.

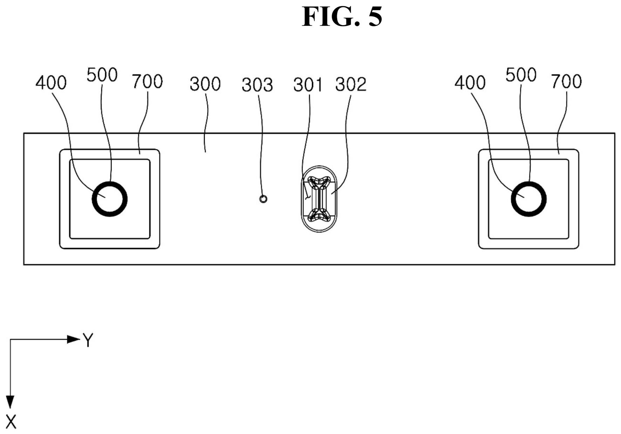

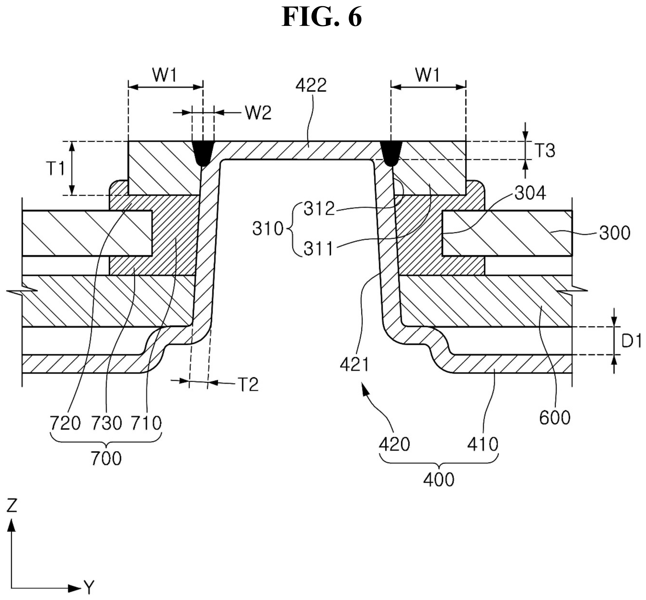

FIG. 5 is a plan view schematically illustrating the configuration of the secondary battery according to one or more embodiments of the present invention and FIG. 6 is a partially enlarged cross-sectional view schematically illustrating the configuration of the secondary battery according to one or more embodiments of the present invention.

Referring to FIGS. 1 to 6, a width W1 of the terminal body portion 311 obtained by subtracting the diameter of the terminal hole portion 312 from a width of the terminal body portion 311 parallel to the second direction may be formed to be greater than a thickness T1 of the terminal body portion 311 parallel to the first direction. For example, the width W1 of the terminal body portion 311 parallel to the second direction, which is obtained by subtracting the diameter of the terminal hole portion 312 from the width of the terminal body portion 311 parallel to the second direction, may be formed to be greater than the thickness T1 of the terminal body portion 311 parallel to the first direction.

For example, the width W1 of the terminal body portion 311 parallel to the second direction, which is obtained by subtracting the diameter of the terminal hole portion 312 from the width of the terminal body portion 311 parallel to the second direction, may be 1.5 times or more the thickness of the terminal body portion 311 parallel to the first direction. In one or more embodiments, the width W1 of the terminal body portion 311 parallel to the second direction may be 6 mm or less.

When the width W1 of the terminal body portion 311 obtained by subtracting the diameter of the terminal hole portion 312 from the width of the terminal body portion 311 parallel to the second direction is less than 1.5 times the thickness T1 of the terminal body portion 311 parallel to the first direction, bursts, cracks, and/or the like may occur in a piercing process during a pressing process of the terminal 310, and if (e.g., when) the width W1 exceeds 6 mm, a current path connected to the bus bar 30 may become longer, so that resistance may be increased.

The thickness T1 of the terminal body portion 311 parallel to the first direction may be 2.5 mm or more and 4 mm or less. When the thickness T1 of the terminal body portion 311 parallel to the first direction is less than 2.5 mm, the terminal body portion 311 may be penetrated by thermal deformation during welding of the bus bar 30, and when the thickness T1 exceeds 4 mm, the size of the secondary battery 20 may increase.

A pair of terminals 310 according to one or more embodiments may be provided. The pair of terminals 310 may be arranged spaced a set interval apart in the second direction. The pair of terminals 310 may be arranged to face each other (and/or may be at opposite sides or opposite ends of the cap plate 300) in the second direction with the vent hole 301 therebetween.

Lower surfaces of each of the pair of terminals 310 may be arranged to face different plate holes 304. The pair of terminals 310 may be arranged to face the first electrode tab 240 and the second electrode tab 250, respectively, in the first direction through the different plate holes 304.

The bus bar 30 may be seated on an upper surface of the terminal 310. The bus bar 30 and the terminal 310 may be joined integrally by laser welding and/or the like.

The pair of terminals 310 may have different polarities. Each of the pair of terminals 310 may be individually connected to the first electrode 210 and the second electrode 220 of the electrode assembly 200, respectively. Accordingly, the pair of terminals 310 may function as a positive terminal and a negative terminal of the secondary battery 20.

The current collector 400 may be connected to the electrode assembly 200. The current collector 400 may pass (*e.g.,* extend) through the terminal 310 in the first direction. The current collector 400 may be formed of a current-conducting material. The current collector 400 may be formed of the same material as the terminal 310.

A pair of current collectors 400 may be provided. The pair of current collectors 400 may be arranged spaced a set interval apart in the second direction. The pair of terminals 310 may be electrically connected to the first electrode 210 and the second electrode 220 by the pair of current collectors 400, respectively.

One of the pair of current collectors 400 may connect the terminal 310 arranged to face the first electrode tab 240 among the pair of terminals 310 to the first electrode tab 240, and the other current collector 400 may connect the terminal 310 arranged to face the second electrode tab 250 among the pair of terminals 310 to the second electrode tab 250.

In one or more embodiments, the current collector 400 may include a current collecting plate 410 and the current collecting protrusion portion 420. Each current collector 400 may include a single current collecting plate 410 that extends under the current collecting protrusion portion 420 and that extends on both sides (e.g., opposites sides) of the current collecting protrusion portion 420 in the second direction.

The current collecting plate 410 may be arranged between the electrode assembly 200 and the cap plate 300. The current collecting plate 410 may be electrically connected to the electrode assembly 200.

A pair of current collecting plates 410 may be provided, and the pair of current collecting plates 410 may be arranged spaced a set interval apart in the second direction.

One of the pair of current collecting plates 410 and the first electrode tab 240 may be joined to each other by laser welding, and the other current collecting plate 410 and the second electrode tab 250 may be joined to each other by laser welding.

The current collecting protrusion portion 420 may protrude from the current collecting plate 410 in the first direction and may be connected to the terminal 310. The current collecting protrusion portion 420 may have a pillar shape extending in the first direction from an upper surface of the current collecting plate 410 facing the plate hole 304. An upper surface of the current collecting protrusion portion 420 may be coplanar with an upper surface of the terminal 310.

The current collecting protrusion portion 420 may pass (*e.g.,* extend) through the plate hole 304. The current collecting protrusion portion 420 passing (*e.g.,* extending) through the plate hole 304 may pass (*e.g.,* extend) through the terminal 310. An upper end of the current collecting protrusion portion 420 may pass (*e.g.,* extend) through the terminal hole portion 312.

The design of a cross-sectional shape of the current collecting protrusion portion 420 may be changed to one or more suitable shapes other than the circle illustrated in the drawing, such as an oval or polygonal shape. The upper end of the current collecting protrusion portion 420 passing (*e.g.,* extending) through the terminal hole portion 312 may be joined to the terminal 310 by laser welding.

The current collecting protrusion portion 420 according to one or more embodiments may include a first surface 421 and a second surface 422 (*see, e.g.,* FIG. 6).

The first surface 421 may extend from the current collecting plate 410. The first surface 421 may extend in the first direction from the upper surface of the current collecting plate 410. The first surface 421 may pass (*e.g.,* extend) through the plate hole 304. The first surface 421 may be referred to as an outer surface of the current collecting protrusion portion 420.

The second surface 422 may be arranged to intersect with the first surface 421. The second surface 422 may be arranged in a direction parallel to the second direction. The second surface 422 may be referred to as an upper surface of the current collecting protrusion portion 420. The second surface 422 may be exposed at the terminal 310.

The second surface 422 may be exposed to the outside of the terminal 310 through the terminal hole portion 312. The bus bar 30 and the second surface 422 that is seated on the upper surface of the terminal 310 may be joined by laser welding and/or the like.

The welded portion 500 may be formed between the current collector 400 and the terminal 310. The welded portion 500 may be formed between the current collecting protrusion portion 420 and the terminal body portion 311. The welded portion 500 may be formed on the outer surface of the upper end of the current collecting protrusion portion 420 inserted into the inside of the terminal hole portion 312 through the terminal hole portion 312 and on the inner surface of the terminal hole portion 312. The outer surface of the upper end of the current collecting protrusion portion 420 and the inner surface of the upper end of the terminal hole portion 312 may be joined to each other by laser welding. This type of butt welding may improve the strength of the weld, helping to reinforce and protect the connection from damage due to vibration and to improve the rigidity of the connection between the current collecting protrusion portion 420 and the terminal body portion 311.

A thickness T2 of the first surface 421 may be formed to be equal to or greater than a width W2 of the welded portion 500 parallel to the second direction. For example, the thickness T2 of the first surface 421 parallel (or substantially parallel) to the second direction may be equal to or greater than the width W2 of the welded portion 500 parallel to the second direction and 1.5 mm or less. In one or more embodiments, the first surface 421 may be angled relative to the first direction and thus a thickness T2 of the first surface would be measured in a direction perpendicular to the opposing surfaces of the first surface, as shown, for example, in FIG. 6.

For example, if (*e.g.,* when) the thickness T2 of the first surface 421 is less than the width W2 of the welded portion 500, the current collector 400 may be thermally deformed during laser welding, and if (*e.g.,* when) the thickness T2 exceeds 1.5 mm, the current collector 400 may be burst or cracked during drawing processing.

A thickness T3 of the second surface 422 parallel to the first direction may be formed to be equal to or greater than the width W2 of the welded portion 500. For example, the thickness T3 of the second surface 422 parallel to the first direction may be equal to or greater than the width W2 of the welded portion 500 parallel to the second direction and may be 1.5 mm or less.

For example, if *(e.g.,* when) the thickness T3 of the second surface 422 parallel to the first direction is less than the width of the welded portion 500, the current collector 400 may be thermally deformed during laser welding, and if (*e.g.,* when) the thickness T3 exceeds 1.5 mm, the current collector 400 may be burst or cracked during drawing processing.

An insulating plate 600 may be arranged between the cap plate 300 and the electrode assembly 200 according to one or more embodiments of the present invention. The insulating plate 600 may insulate the cap plate 300 and the electrode assembly 200 by preventing or reducing the likelihood of direct contact between the cap plate 300 and the electrode assembly 200.

The insulating plate 600 may fix a position of the electrode assembly 200 inside the case 100. The insulating plate 600 may prevent or reduce the likelihood of the electrode assembly 200 being damaged if (*e.g.,* when) the cap plate 300 is deformed toward the inside of the case 100 due to external impact and/or the like.

According to one or more embodiments, the insulating plate 600 may be arranged inside the case 100 to face the electrode assembly 200 in the first direction. For example, the electrode assembly 200, the insulating plate 600, and the cap plate 300 may be sequentially arranged in the first direction.

The insulating plate 600 may be fixed to an inner surface of the case 100 by one or more suitable types (kinds) of joining methods such as fitting, welding, bolting, adhesion, and/or the like.

The insulating plate 600 may be brought into contact with one surface of the electrode assembly 200 from which the first electrode tab 240 and the second electrode tab 250 extend.

The insulating plate 600 may be formed of an insulating material such as polyethylene (PE), polypropylene (PP), polyethylene terephthalate (PET), rubber, and/or the like.

The insulating plate 600 according to one or more embodiments may be spaced and/or apart (*e.g.,* spaced apart or separated) from the current collecting plate 410. The insulating plate 600 may be arranged spaced and/or apart (*e.g.,* spaced apart or separated) from the current collecting plate 410 in the first direction.

A separation distance D1 between the insulating plate 600 and the current collecting plate 410 may be 0.5 mm or more and 1 mm or less. For example, if (*e.g.,* when) the separation distance D1 between the insulating plate 600 and the current collecting plate 410 is less than 0.5 mm, insulation may not be maintained between the cap plate 300 and the current collecting plate 410, and if (*e.g.,* when) the separation distance D1 exceeds 1 mm, because thermal deformation of about 1 mm occurs if (*e.g.,* when) welding the current collecting plate 410 to the first electrode tab 240 and the second electrode tab 250, the insulating plate 600 may not sufficiently support the current collector 400. For example, the insulating plate 600 may be located at too far of a distance to sufficiently support the current collector 400 when the separation distance D1 is greater than 1 mm, and thus thermal deformation may not be reduced, which may lead to reduced electrical conductivity.

A gasket 700 may be arranged between the cap plate 300 and the terminal 310 according to one or more embodiments.

The gasket 700 may function as a component for electrically insulating the cap plate 300 and the terminal 310 from each other. The gasket 700 may be formed of an insulating material such as polyethylene (PE), polypropylene (PP), polyethylene terephthalate (PET) rubber, and/or the like. The gasket 700 may be formed by injection molding.

The gasket 700 according to one or more embodiments may include a gasket body 710, an outer gasket 720, and an inner gasket 730.

The gasket body 710 may form the exterior of a central portion of the gasket 700 and may support the outer gasket 720 and the inner gasket 730.

The gasket body 710 according to one or more embodiments may be arranged between the current collecting protrusion portion 420 and the cap plate 300. The gasket body 710 may penetrate (*e.g.,* extend through) the cap plate 300 through the plate hole 304.

A central axis of the gasket body 710 may be arranged at (on) the same axis as a central axis of the terminal hole portion 312. A hollow space passing (*e.g.,* extending) through the gasket body 710 in the first direction may be formed in a central portion of the gasket body 710. Accordingly, the current collecting protrusion portion 420 of the current collector 400 may come into contact with the terminal through the hollow space of the gasket body 710. An outer surface of the gasket body 710 may come into close contact with an inner surface of the cap plate 300 around (*e.g.,* surrounding) the plate hole 304.

The outer gasket 720 may extend from the gasket body 710 to the outside of the cap plate 300. The outer gasket 720 may be arranged to face the upper surface of the cap plate 300 and may support the terminal 310.

The inner gasket 730 may extend from the gasket body 710 to the inside of the cap plate 300, that is, to the inner space of the case 100. The inner gasket 730 may be arranged to face the lower surface of the cap plate 300.

The inner gasket 730 according to one or more embodiments may extend in a direction parallel to the lower surface of the cap plate 300 from a lower end of the gasket body 710. The inner gasket 730 may come into close contact with the lower surface of the cap plate 300. An end of the inner gasket 730 may define a space between the lower surface of the cap plate 300 and the insulating plate 600. For example, the thickness of the inner gasket 730 may define the distance by which the lower surface of the cap plate 300 and the upper surface of the insulating plate 600 are separated from each other.

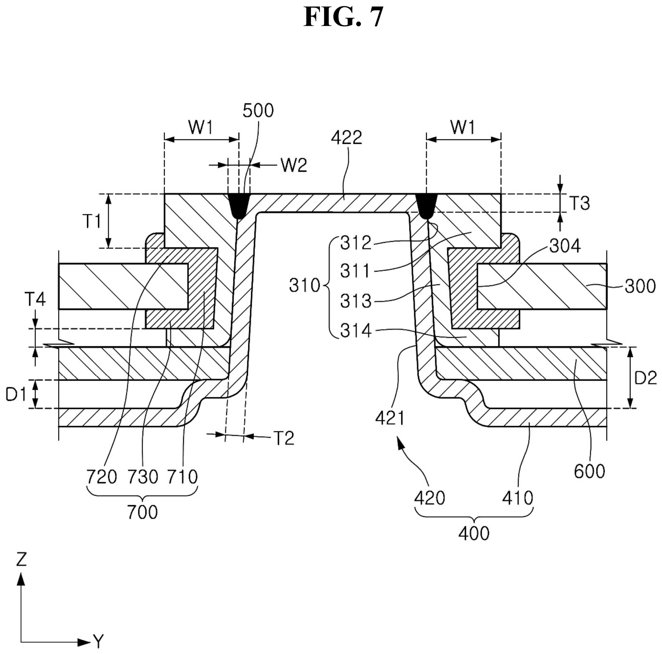

FIG. 7 is a partially enlarged cross-sectional view schematically illustrating a configuration of a secondary battery according to one or more embodiments of the present invention.

Referring to FIG. 7, a secondary battery 20 according to one or more embodiments of the present invention may include a case, an electrode assembly, a cap plate 300, a current collector 400, and a welded portion 500. The case and the electrode assembly may be identical or similar to the embodiments of the case 100 and the electrode assembly 200 described above.

The components of the secondary battery of FIG. 7 are substantially the same as those described above with reference to FIGS. 1-6, and redundant descriptions thereof may not be repeated. The description will mainly focus on the differences of the embodiments of FIG. 7, for example, regarding the terminal 310.

A terminal 310 may be provided in the cap plate 300 according to one or more embodiments. The terminal 310 may function as a component that provides electrical connection of the secondary battery 20 to a bus bar 30 or an external power device.

The terminal 310 may be formed of an electrically conductive material such as aluminum, nickel, copper, and/or the like.

The terminal 310 according to one or more embodiments may include a terminal body portion 311, a terminal hole portion 312, a terminal extension portion 313, and a terminal pressing portion 314.

The terminal body portion 311 may form the overall exterior of the terminal 310 and may protrude outwardly from the cap plate 300. For example, the terminal body portion 311 may be arranged at a position spaced a set interval apart from an upper surface of the cap plate 300 in the first direction. A lower surface of the terminal body portion 311 may be arranged to face a plate hole 304 formed by passing (e.g., extending) through the cap plate 300. The cross-sectional area of the terminal body portion 311 may be larger than the cross-sectional area of the plate hole 304.

The terminal hole portion 312 may be provided in the terminal body portion 311. The terminal hole portion 312 may be formed by passing (*e.g.,* extending) through a central portion of the terminal body portion 311 in the first direction. A current collecting protrusion portion 420 of the current collector 400 may pass (*e.g.,* extend) through the terminal hole portion 312 in the first direction.

The terminal extension portion 313 may extend from the terminal body portion 311 in a direction opposite to the first direction. The terminal extension portion 313 may be formed to have a hollow shape. The interior of the terminal extension portion 313 may communicate with the terminal hole portion 312, *e*.*g*., the interior space of the terminal extension portion 313 and the interior space of the terminal body portion 311 (and the interior space of the terminal pressing portion 314 described in more detail below) may define the terminal hole portion 312.

The diameter of the terminal extension portion 313 may be the same as the diameter of the terminal hole portion 312. An inner surface of the terminal extension portion 313 may come into close contact with an outer surface of the current collecting protrusion portion 420. The terminal extension portion 313 may be formed in a shape that surrounds a first surface 421 of the current collecting protrusion portion 420.

The terminal pressing portion 314 may press against a gasket 700 by bending an end of the terminal extension portion 313 in a radial direction of the terminal extension portion 313. The terminal pressing portion 314 may be formed by spinning or drawing processing. The terminal pressing portion 314 may extend from the end of the terminal extension portion 313 in a direction parallel to the second direction.

The terminal pressing portion 314 may press an inner gasket 730 against a lower surface of the cap plate 300 to fix the inner gasket 730 to the cap plate 300. In other words, pressure exerted by the terminal pressing portion 314 may press or hold the inner gasket 730 to the cap plate 300, thereby helping to secure the inner gasket 730 to the cap plate 300.

An interior space of the terminal pressing portion 314, together with the interior space of the terminal extension portion 313 and the interior space of the terminal body portion 311, may define the terminal hole portion 312.

A thickness T4 of the terminal pressing portion 314 parallel to the first direction may be 1 mm or more and 1.5 mm or less. When the thickness T4 of the terminal pressing portion 314 parallel to the first direction is less than 1 mm, the springback of the inner gasket 730 may not be reduced if (*e.g.,* when) the inner gasket 730 is pressed by bending, and thus the pressing characteristics may not be maintained, and if (*e.g.,* when) the thickness T4 exceeds 1.5 mm, cracks may occur during the bending.

The terminal pressing portion 314 may be arranged spaced and/or apart (*e.g.,* spaced apart or separated) from the current collecting plate 410 in the first direction. A separation distance D2 between the terminal pressing portion 314 and the current collecting plate 410 may be 0.5 mm or more and 1 mm or less.

When the separation distance D2 between the terminal pressing portion 314 and the current collecting plate 410 is less than 0.5 mm, assembly interference between the terminal pressing portion 314 and the current collecting plate 410 may occur, and if (*e.g.,* when) the separation distance D2 exceeds 1 mm, the thermal deformation of about 1 mm that occurs during welding of the current collecting plate 410 to the first electrode tab 240 and the second electrode tab 250, so that the terminal pressing portion 314 may not sufficiently support the current collector 400. For example, the terminal pressing portion 314 may be located at too far of a distance to sufficiently support the current collector 400 when the separation distance D2 is greater than 1 mm, and thus thermal deformation may not be reduced, which may lead to reduced electrical conductivity.

The separation distance (D1) indicated in FIG. 7, like the separation distance (D1) in FIG. 6, is a reference numeral referring to a separation distance between the insulating plate (600) and the current collecting plate (410). However, this does not mean that the two embodiments have the same numerical range, and the separation distance (D1) in FIG. 7 may be set to a value different from that in FIG. 6 depending on the structure.

According to the present invention, by connecting a current collector and a terminal by butt welding rather than lap welding, it is possible to reduce the risk of burn through. Further, by using butt welding, a welding depth can be increased for the weld between the terminal and the current collector, further improving and strengthening the connection between the terminal and the current collector.

According to the present invention, by increasing a welding area, it is possible to reinforce against vibration and to increase rigidity.

According to embodiments of the present invention, by eliminating a forged portion of a terminal, it is possible to easily manufacture a single product, thereby reducing processing costs.

However, the effects obtainable through the present invention are not limited to the above effects, and other technical effects that are not mentioned will be clearly understood by those skilled in the art from the description of the present invention.

The portable device, vehicle, and/or the battery, *e*.*g*., a battery controller, and/or any other relevant devices or components according to embodiments of the present invention described herein may be implemented utilizing any suitable hardware, firmware (*e.g.,* an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present invention.

A person of ordinary skill in the art, in view of the present invention in its entirety, would appreciate that each suitable feature of the various embodiments of the present invention may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the spirit and scope of the present invention as defined in the appended claims, and their equivalents.

## Claims

1. A secondary battery (20) comprising:
a case (100);
an electrode assembly (200) accommodated in the case (100);
a cap plate (300) facing the electrode assembly (200);
a pair of terminals (310) on the cap plate (300), the terminals (310) having different polarities;
a current collector (400) connected to the electrode assembly (200) and extending through a first terminal (310) of the terminals (310); and
a welded portion (500) between the current collector (400) and the first terminal (310).

2. The secondary battery (20) of claim 1, wherein the current collector (400) comprises:
a current collecting plate (410) between the electrode assembly (200) and the cap plate (300) and connected to the electrode assembly (200); and
a current collecting protrusion portion (420) protruding from the current collecting plate (410) in a first direction and passing through the first terminal (310).

3. The secondary battery (20) of claim 2,
wherein the first terminal (310) comprises a terminal body portion (311), the terminal body portion (311) defining a terminal hole portion (312) that extends through the terminal body portion (311) in the first direction, and
wherein the current collecting protrusion portion (420) extends through the terminal hole portion (312).

4. The secondary battery (20) of claim 3, wherein the welded portion (500) is between the current collecting protrusion portion (420) and the terminal body portion (311).

5. The secondary battery (20) of claim 3 or 4, wherein a width (W1) of the terminal body portion (311) obtained by subtracting a diameter of the terminal hole portion (312) from a width of the terminal body portion (311) parallel to a second direction intersecting the first direction is greater than a thickness (T1) of the terminal body portion (311) parallel to the first direction.

6. The secondary battery (20) of claim 5,
wherein the width (W1) of the terminal body portion (311) is 1.5 times or more than the thickness (T1) of the terminal body portion (311) and
wherein the width (W1) of the terminal body portion (311) is 6 mm or less.

7. The secondary battery (20) of any one of claims 3 to 6, wherein a thickness (T1) of the terminal body portion (311) parallel to the first direction is 2.5 mm or more and 4 mm or less.

8. The secondary battery (20) of any one of claims 3 to 7, wherein the current collecting protrusion portion (420) comprises:
a first surface (421) extending from the current collecting plate (410); and
a second surface (422) intersecting the first surface (421) and exposed at the terminal (310).

9. The secondary battery (20) of claim 8, wherein a thickness (T2) of the first surface (421) is equal to or greater than a width (W2) of the welded portion (500) parallel to the second direction.

10. The secondary battery (20) of claim 8, wherein a thickness (T3) of the second surface (422) parallel to the first direction is equal to or greater than a width (W2) of the welded portion (500) parallel to a second direction intersecting the first direction (421).

11. The secondary battery (20) of any one of claims 2 to 10, further comprising an insulating plate (600) between the cap plate (300) and the electrode assembly (200) and spaced from the current collecting plate (410).

12. The secondary battery (20) of any one of claims 3 to 11, further comprising a gasket (700) between the cap plate (300) and the first terminal (310).

13. The secondary battery (20) of claim 12, wherein the first terminal (310) further comprises:
a terminal extension portion (313) that extends from the terminal body portion (311), the terminal extension portion (313) defining the terminal hole portion (312) together with the terminal body portion (311); and
a terminal pressing portion (314) holding the gasket (700) to the cap plate (300).

14. The secondary battery (20) of claim 13, wherein the terminal pressing portion (314) is spaced from the current collecting plate (410) in the first direction.

15. A battery pack comprising:
a housing (10); and
a plurality of secondary batteries (20) inside the housing (10),
wherein each of the secondary batteries (20) comprises:
a case (100);
an electrode assembly (200) accommodated in the case (100);
a cap plate (300) facing the electrode assembly (200);
a pair of terminals (310) on the cap plate (300), the terminals (310) having different polarities;
a current collector (400) connected to the electrode assembly (200) and extending through a first terminal (310) of the terminals (310); and
a welded portion (510) between the current collector (400) and the first terminal (310).
